Europäisches Patentamt

European Patent Office

Office européen des brevets

(11) Veröffentlichungsnummer: **0 265 385 B1**

# EUROPÄISCHE PATENTSCHRIFT

(45) Veröffentlichungstag der Patentschrift: **11.09.91**

(51) Int. Cl.⁵: **B01D 29/64**

(21) Anmeldenummer: **87810596.4**

(22) Anmeldetag: **16.10.87**

Die Akte enthält technische Angaben, die nach dem Eingang der Anmeldung eingereicht wurden und die nicht in dieser Patentschrift enthalten sind.

(54) **Vorrichtung zur Reinigung eines Siebes oder Rechens in einer Abwasseranlage.**

(30) Priorität: **17.10.86 CH 4142/86**

(43) Veröffentlichungstag der Anmeldung:
**27.04.88 Patentblatt 88/17**

(45) Bekanntmachung des Hinweises auf die Patenterteilung:
**11.09.91 Patentblatt 91/37**

(84) Benannte Vertragsstaaten:
**AT CH DE FR LI**

(56) Entgegenhaltungen:
**WO-A-82/01664**
**WO-A-82/03338**
**US-A- 3 469 705**

(73) Patentinhaber: **Nill, Werner**
**Eigenheimweg 45**
**CH-8400 Winterthur(CH)**

(72) Erfinder: **Nill, Werner**
**Eigenheimweg 45**
**CH-8400 Winterthur(CH)**

(74) Vertreter: **Gachnang, Hans Rudolf**
**Patentanwalt H.R. Gachnang Badstrasse 5**
**Postfach**
**CH-8501 Frauenfeld(CH)**

## Beschreibung

Gegenstand der vorliegenden Erfindung ist eine Vorrichtung zur Reinigung eines in Betrieb stehenden, von unten nach oben durchflossenen Siebes oder Rechens in einem Abwasserbecken gemäß Oberbegriff des Patentanspruches 1.

In Abwasseranlagen wird bei grossem Anfall von Wasser, z.B. nach Regenfällen, der nicht der Abwasserreinigungsanlage zuführbare Teil des zugeführten Abwassers direkt an ein Gewässer weitergeleitet. Dieses direkt weitergeleitete Abwasser wird mittels eines Siebes oder Rechens von grösseren Verunreinigungen befreit.

Das für diesen Zweck verwendete Sieb oder der entsprechende Rechen wird vom Wasser von unten nach oben durchflossen, so dass die dort zurückgehaltenen Verunreinigungen unterhalb des Siebes an demselben anhaften. Nach einer gewissen Zeit setzt sich das sieb zu, und eine Reinigung desselben wird nötig. Eine Unterbrechung des Durchflusses während der Reinigung ist nicht möglich. Die Reinigung muss demnach im Betrieb erfolgen.

Aus der EP-A-68449 ist es bekannt, anhaftende Verunreinigungen mittels eines von oben auf die Sieboberfläche fallenden Wasserschwalles von der Siebunterfläche zu entfernen. Zu diesem Zwecke muss der Wasserspiegel unter dem Sieb während des Reinigungsvorganges abgesenkt werden, damit das von oben auf die Siebfläche fallende Wasser durch das Sieb hindurchtreten und die Verunreinigungen von diesem ablösen kann. Bei lang anhaltenden Regenfällen ist eine Absenkung nicht möglich.

Aus der WO-A-82/01664 ist eine Reinigungsanlage zum Klären von von mit Spänen und dergleichen verunreinigter Kühlflüssigkeit bekannt. Diese Anlage besteht aus einem Absetzbehälter, in den die verunreinigte Flüssigkeit eingeleitet wird und in dem sich die Verunreinigungen absetzen können. Ein zweiter, in den ersten eingebauter Entnahmebehälter weist einen aus Gitterstäben bestehenden Boden auf, durch den die von dem sich auf dem Boden des ersten Behälters abgesetzten Verunreinigungen befreite Flüssigkeit von unten nach oben eintritt. Schwebende Verunreinigungen werden an der Unterseite des Entnahmebehälters zurückgehalten. Zwischen zwei parallel zueinander in einem Abstand umlaufenden Ketten angeordnete Abstreifbleche streifen die an der Unterseite des Entnahmebehälters anhaftenden Verunreinigungen ab. Diese fallen zwischen den Abstreifblechen hindurch nach unten auf den Boden des Absetzbehälters und werden dort von den am zurücklaufenden Trum der Ketten angeordneten, nach unten gerichteten Abstreifblechen aus dem Absetzbecken hinausgeschoben. Die bekannte Anlage hat den Nachteil, dass die abgestreiften Verunreinigungen wieder lose in die zuströmende Flüssigkeit fallen und erneut an die Unterseite des Siebes gespült werden können. Eine Verwendung einer auf dem Prinzip des Absetzens beruhende Anlage ist bei den riesigen, kurzfristig anfallenden und zu reinigenden Wassermengen in einem Abwasserbecken nicht möglich.

Aus der US-A-3,469,705 ist eine Vorrichtung zum Reinigen eines Siebes in einer geschlossenen Leitung bekannt. Die Reinigung erfolgt durch eine Vielzahl von aus Düsen mit hohem Druck austretender Flüssigkeit, welche das Sieb im Gegenstrom zu der im Rohr transportierten Flüssigkeit durchströmt. Die vom Sieb abgelösten Verunreinigungen werden von einer den Düsen gegenüberliegenden Saugeinrichtung angesaugt und aus der Leitung abgeführt. Eine solche Vorrichtung benötigt sehr viel Energie, um einerseits Flüssigkeit mit Druck zuzuführen und andererseits den für den Abtransport notwendigen Unterdruck zu erzeugen. Eine Verwendung in einer Abwasseranlage mit Sieben, die duzende von Quadratmetern gross sein können, ist ausgeschlossen.

Hier will die Erfindung Abhilfe schaffen.

Die Erfindung, wie sie in den Ansprüchen gekennzeichnet ist, löst die Aufgabe, eine Vorrichtung zur Reinigung eines Siebes in Abwasseranlagen zu schaffen, mit der an der Unterseite des Siebes anhaftende Verunreinigungen während des Betriebes, d.h. während der Durchflutung des Siebes, mit einem am sieb vorbeigeführten Abstreifblech abgelost und aus dem Bereich der Siebunterseite entfernt werden können.

Die durch die Erfindung erreichten Vorteile sind im wesentlichen darin zu sehen, dass das Sieb dauernd seine Durchlässigkeit behält und die von der Siebunterfläche abgelösten Verunreinigungen abgeführt oder zurückgehalten werden können. Der Betrieb des Siebes kann auf diese Weise über Tage hinweg ohne Unterbruch und Verminderung der Durchsatzmenge erfolgen.

Die abgestreiften Verunreinigungen können sporadisch oder in regelmässigen Abständen aus dem Sammelbehälter abgeführt werden. Bei einem schwenkbaren Behälter erfolgt die Entleerung automatisch, sobald der Wasserspiegel infolge Rückgang der Wassermenge absinkt, oder wenn zur zusätzlichen Reinigung des Siebes mit einem Wasserschwall aus einer Spülkippe der Wasserspiegel abgesenkt wird. Mit dem Wasserschwall erfolgt gleichzeitig auch eine Reinigung der Abstreiforgane und/oder des Behälters.

Im folgenden wird die Erfindung anhand von Ausführungsbeispielen näher erläutert. Es zeigen:

Figur 1     eine perspektivische Darstellung eines Teiles einer Abwasseranlage,

Figur 2     einen Querschnitt den Behälter und

| | das Sieb |
| --- | --- |
| Figur 3 | einen Querschnitt durch einen weiteren Behälter und das Sieb. |

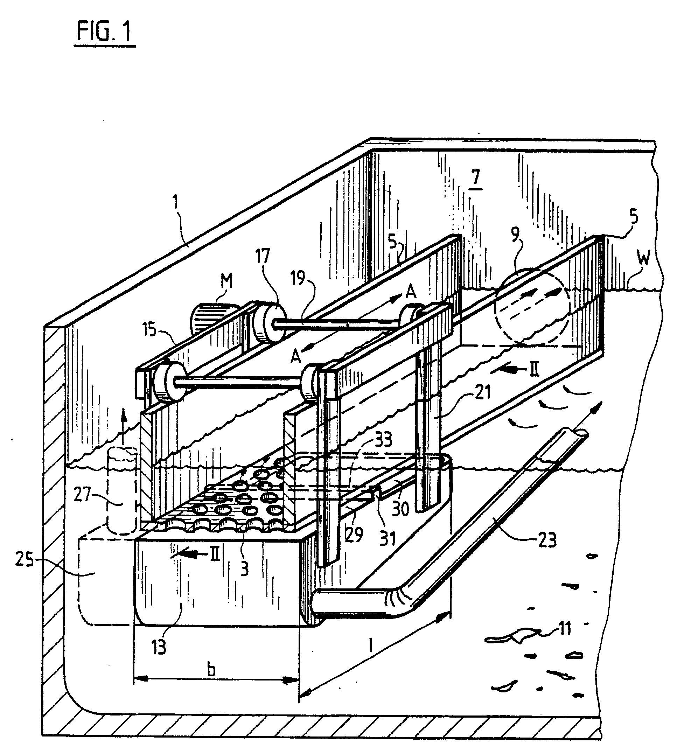

In Figur 1 ist ein Ausschnitt eines Abwasserbeckens 1 mit einem darin angeordneten Sieb oder Rechen 3 dargestellt. Das Sieb 3 befindet sich unterhalb zweier vertikal liegender Wände 5, die stirnseitig mit der Wand 7 des Beckens 1 verbunden sind. In der Wand 7 ist die Ausflussöffnung 9, welche das vom Sieb 3 von groben Verunreinigungen 11 befreite Abwasser direkt einem Gewässer zuführt. Der Wasserspiegel W befindet sich über der Oberfläche des Siebes 3. Die Speisung des Abwasserbeckens 1 mit Abwasser ist nicht dargestellt; sie ist nicht Gegenstand dieser Erfindung.

Das Sieb 3 bildet zusammen mit den Wänden 5 einen Kanal, dessen Querschnitt im wesentlichen rechteckig ist. Unterhalb des Siebes 3 ist ein Behälter 13 an einer Tragvorrichtung 15 aufgehängt. Die Tragvorrichtung 15 besteht im wesentlichen aus vier auf der Oberkante der Wände 5 abrollenden Rädern 17 und einem Motor M, mit dem mindestens eine der beiden Achsen 19 antreibbar ist. Der Behälter 13 ist mittels vier Trägern 21 an der Tragvorrichtung 15 aufgehängt und entlang dem Sieb 13 verschiebbar (Pfeile A). Am Behälter 13 kann eine Absaugleitung 23 angebracht sein. Anstelle der Absaugleitung 23 kann am Behälter 13 seitlich ein Zusatzbehälter 25 angeordnet sein (in gebrochenen Linien dargestellt), der oben eine Öffnung 27 aufweist. Der Zusatzbehälter 25 kann sich über die gesamte Länge des Behälters 13 erstrekken oder nur über einen Teil davon. Der Behälter 13 ist im hinteren Bereich, d.h. im Bereich, der dem Betrachter der Figur 1 Zugewendet ist, an der Oberseite mit einem Deckel 29 verschlossen. Im Vorderteil ist der Behälter 13 offen (Oeffnung 30) und gegen den Deckel 29 hin mit einem den Dekkel 29 nach oben überragenden Abstreifblech 31 versehen. Die Oberkante 33 des Abstreifbleches 31 liegt parallel zur Unterseite des Siebes 3 und in Anlage mit demselben. Die Oberkante 33 kann aus Kunststoff bestehen.

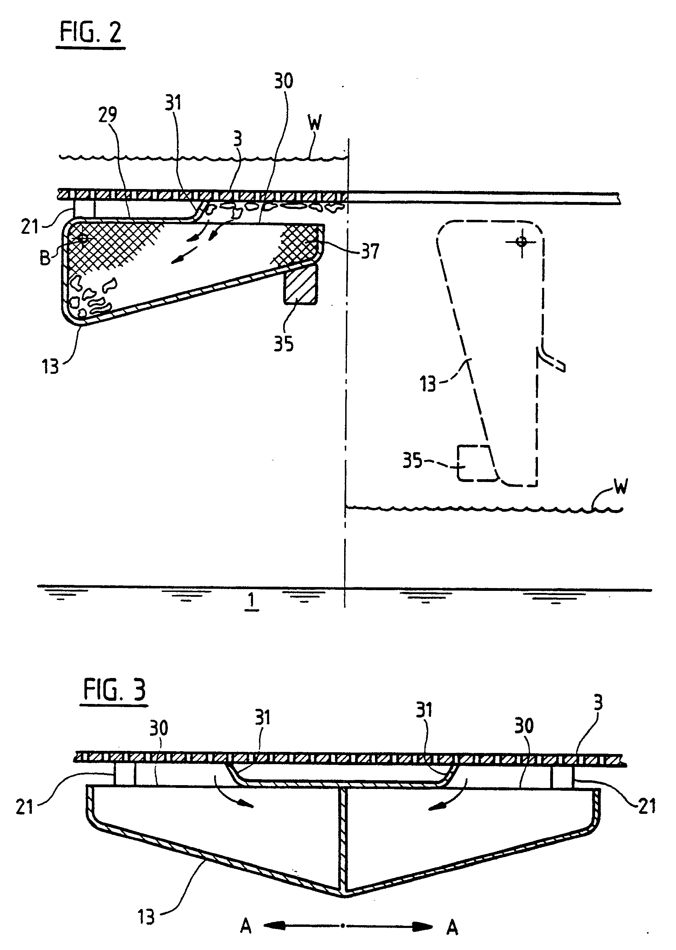

Der Querschnitt durch eine weitere Ausführungsform des Behälters 13 gemäss Figur 2 zeigt, dass der Behälter 13 um eine Achse B schwenkbar gelagert ist, welche Achse mit den Trägern 21 verbunden ist. Damit der Behälter 13 bzw. dessen Abstreifblech 31 in Anlage mit dem Sieb 3 liegt, ist am Behälter 13 ein Auftriebskörper 35 angeordnet, der die Vorderseite des Behälters 13 nach oben drückt. Der Wasserspiegel W im Abwasserbecken 1 ist, wie bereits gesagt, in Betriebszustand oberhalb des Siebes 3. Durch den Auftrieb des Auftriebskörpers 35 wird dadurch das Abstreifblech 31 an die Unterseite des Siebes 3 angedrückt.

Anstelle des Auftriebskörpers 35 kann auch eine Feder (nicht gezeigt) treten, welche den Behälter 13 nach oben schwenkt und das Abstreifblech 31 an das Sieb 3 andrückt.

In der Ausführung nach Figur 3 besteht der Behälter 13 aus zwei im wesentlichen symmetrischen Behälterteilen entsprechend des in Figur 1 gezeigten. Bei diesem doppelt wirkenden Behälter 13 wirkt der rechte Abstreifer 31 bei der Bewegung nach rechts und der linke bei der zurücklaufenden Bewegung. Analog zum Behälter 13 in Figur 1 kann der Behälter 13 nach Figur 3 mit einer Absaugleitung 23 oder einem Zusatzbehälter 25 ausgerüstet sein.

Die seitlichen Wände der Behälter 13 sind vorzugsweise mit Perforationen versehen oder bestehen aus einem feinmaschigen Geflecht 37 (Figur 2) damit das vom Abstreifblech 31 in den Behälter 13 geleitete Wasser entweichen kann.

Die Reinigung des Siebes 3 mit der erfindungsgemässen Vorrichtung geschieht wie folgt: Durch den Antriebsmotor M wird der Behälter 13 mittels der TragVorrichtung 15 entlang der Unterseite des Siebes 3 geführt. Die an der Unterseite des Siebes 3 anliegende Oberkante 33 des Abstreifbleches 31 kratzt dabei die am Sieb 3 anhaftenden Verunreinigungen 11 von diesem ab und leitet sie gleichzeitig ins Innere des Behälters 13. Je nach Verschmutzungsgrad des Siebes 3 bzw. Grösse des Behälters 13 kann auch dieser mehrere Male die Gesamtlänge des Siebes 3 abfahren, bevor eine Entleerung notwendig wird.

Die Entleerung kann entweder durch Absaugen des Behälterinhaltes durch die Leitung 23 erfolgen, welche Leitung 23 mittels einem flexiblen Schlauch mit einer Absaugvorrichtung verbunden ist oder jeweils verbunden wird. Die Entleerung kann aber auch durch die Öffnung 27 vorgenommmen werden, indem deren Inhalt durch ein einzuführendes Saugrohr entnommen wird.

Anstelle einer Absaugung mittels Pumpe kann die Leitung 23 auch als Heber ausgestaltet sein, der über den Beckenrand hinausgeführt wird und dessen Ausflussöffnung tiefer liegt als der Behälter 13. Die Saugwirkung des Hebers kann durch einen von einer Spülkippe auf die Sieboberfläche fallenden Wasserschwall ausgelöst werden.

Bei der Ausführung nach Figur 2 erfolgt die Entleerung des Behälters 13 erst nach Absenken des Wasserspiegels W, wodurch sich der Behälter 13 um die Achse B nach unten schwenkt und deren Inhalt durch die Öffnung 30 nach unten ausgeschüttet wird. Der ausgeschüttete Inhalt wird durch eine Entleerungsöffnung aus dem Becken 1 abgeleitet.

## Patentansprüche

1. Vorrichtung zur Reinigung eines in Betrieb stehenden, von unten nach oben durchströmten Siebes oder Rechens (3) in einem Abwasserbecken (1) mit einem entlang der Unterseite des Siebes oder Rechens (3) fahrbar angeordneten Abstreifblech (31), dadurch gekennzeichnet, daß das Abstreifblech (31) an der zumindest teilwiese offenen Oberseite eines mit dem Abstreifblech (31) verfahrbaren Behälters (13) zur Aufnahme der durch das Abstreifblech (31) von der Unterseite des Siebes oder Rechens (3) abgelösten Verunreinigungen angeordnet ist.

2. Vorrichtung nach Anspruch 1, dadurch gekennzeichnet, dass der Behälter (13) und das Abstreifblech (31), an einer fahrbaren Tragvorrichtung (15) aufgehängt sind.

3. Vorrichtung nach einem der Ansprüche 1 oder 2, dadurch gekennzeichnet, dass mindestens eine Wand (37) des Behälters (13) perforiert ist.

4. Vorrichtung nach einem der Ansprüche 1 bis 3, dadurch gekennzeichnet, dass am Behälter (13) zum periodischen oder kontinuierlichen Ableiten der gesammelten Verunreinigungen (11) eine Saugleitung (23) angeschlossen ist.

5. Vorrichtung nach einem der Ansprüche 1 bis 4, dadurch gekennzeichnet, dass am Behälter (13) seitlich ein Zusatzbehälter (25) mit einer obenliegenden Öffnung (27) zum Absaugen der gesammelten Verunreinigungen (11) angebracht ist.

6. Vorrichtung nach einem der Ansprüche 1 bis 3, dadurch gekennzeichnet, dass der Behälter (13) um eine horizontale Achse (B) schwenkbar aufgehängt ist, und dass am Behälter (13) ein den Behälter (13) um die Achse schwenkender Auftriebskörper (35) oder eine Feder angebracht ist.

7. Vorrichtung nach einem der Ansprüche 1 bis 5, dadurch gekennzeichnet, dass zwei im wesentlichen identische Behälter (13) spiegelbildlich zueinander angeordnet sind und jedem Behälter (13) ein Abstreifblech (13) zugeordnet ist.

## Claims

1. Device for cleaning a flow sieve or grating (3) in operation in a sewage tank (1) with a movable scraper plate (31) arranged along the underside of the sieve or grating (3), characterized in that the scraper plate (31), at least on the partly open upper side, is arranged with a movable container (13) for the reception of the dirt loosened through the stripper plate (31) from the underside of the sieve or grating (3).

2. Device according to Claim 1, characterized in that the container (13) and the scraper plate (31) are suspended on a carrying device (15).

3. Device according to one of the Claims 1 or 2, characterized in that at least one wall (37) of the container (13) is perforated.

4. Device according to one of the Claims 1 to 3, characterized in that a suction pipe is connected on the container (13) for the periodical or continuous diversion of the accumulated dirt (11).

5. Device according to one of the Claims 1 to 4, characterized in that an additional container (25) with an upper opening (27) is fitted laterally on the container (13) for the removal of the accumulated dirt (11) by suction.

6. Device according to one of the Claims 1 to 3, characterized in that the container (13) is suspended to swivel on a horizontal axis (B) and that a driving body or a spring is fitted on the container (13) to swivel on the axis.

7. Device according to one of the Claims 1 to 5, characterized in that two substantially identical containers (13) are arranged as mirror images of each other and that a scraper plate (31) is assigned to each container (13).

## Revendications

1. Dispositif de nettoyage d'un tamis ou grille (3), disposé dans un bassin (1) de traitement des eaux usées, traversé de bas en haut par un écoulement et se trouvant en service, au moyen d'une tôle de raclage (31) disposée de façon à pouvoir être déplacée en translation le long de la face inférieure du tamis ou grille (3), caractérisé en ce que la tôle de raclage (31) est montée sur la face supérieure, ouverte au moins partiellement, d'un réservoir (13) agencé de façon à pouvoir être déplacé en translation avec la tôle de raclage (31) et destiné à recevoir les impuretés détachées de la face inférieure du tamis ou grille (3) par la tôle de raclage (31).

2. Dispositif suivant la revendication 1, caractérisé en ce que le réservoir (13) et la tôle de raclage (31) sont suspendus à un dispositif de support (15) agencé de façon à pouvoir être déplacé en translation.

3. Dispositif suivant l'une des revendications 1 et 2, caractérisé en ce qu'au moins une paroi (37) du réservoir (13) est perforée.

4. Dispositif suivant l'une des revendications 1 à 3, caractérisé en ce qu'une tuyauterie d'aspiration (23) est raccordée au réservoir (13) en vue d'une évacuation périodique ou continue des impuretés (11) recueillies.

5. Dispositif suivant l'une des revendications 1 à 4, caractérisé en ce qu'un réservoir supplémentaire (25) est fixé sur le côté du réservoir (13), ce réservoir supplémentaire (25) comportant, à sa partie supérieure, une ouverture (27) permettant l'aspiration des impuretés (11) recueillies.

6. Dispositif suivant l'une des revendications 1 à 3, caractérisé en ce que le réservoir (13) est suspendu de façon à pouvoir baseuler autour d'un axe horizontal (B) et en ce que le réservoir (13) comporte un flotteur (35) ou un ressort le faisant basculer autour de cet axe.

7. Dispositif suivant l'une des revendications 1 à 5, caractérisé en ce que deux réservoirs (13) pratiquement identiques sont disposés d'une manière symétrique l'un de l'autre par rapport à un plan et en ce qu'une tôle de raclage (31) est associée à chaque réservoir (13).

## FIG. 1

## FIG. 2

## FIG. 3